# EUROPÄISCHE PATENTANMELDUNG

(11) **EP 2 180 387 A1**
(43) Veröffentlichungstag der Anmeldung: **28.04.2010**
(21) Anmeldenummer: 08405268.7
(22) Anmeldetag: 24.10.2008
(51) Int. Cl.: G05B 19/042, B65G 1/137

(54) **Verfahren zum Kommissionieren von Druckprodukten mit bereitgestellten Zusatzprodukten in einem Versandraum mittels Leitsystem sowie Anlage zum Durchführen des Verfahrens**

(71) Anmelder: Müller Martini Holding AG, 6052 Hergiswil (CH)
(72) Erfinder: Rothenbühler, Hans, 5603 Staufen (CH); Künzli, Thomas, 4053 Basel (CH)

(57) **Zusammenfassung**

Mit einem verfahren und einer Anlage zum Kommissionieren von in einem Versandraum (2) zu Druckereierzeugnissen verarbeiteten Druckprodukten mit bereitgestellten Zusatzprodukten werden die bereitgestellten Zusatzprodukte in einem Bereitstellungsbereich (4) von einem erweiterten Leitsystem (33) erfasst und manuell oder automatisch kommissioniert.

## Beschreibung

Die Erfindung betrifft ein Verfahren zum Kommissionieren von in einem Versandraum mittels Leitsystem zu Druckereierzeugnissen verarbeiteten Druckprodukten mit bereitgestellten Zusatzprodukten. Die Erfindung betrifft auch eine Anlage zum Durchführen des Verfahrens.

Solche Verfahren sind seit langem bekannt. Sie ermöglichen den Versand beispielsweise von Zeitungen, Zeitschriften und dergleichen in grossen Serien. Das Druckprodukt kann direkt von der Druckmaschine hergestellt und auch eingesteckte Produkte enthalten. Möglich sind auch manuell zugeführte Beilagen. Die Druckprodukte werden einer automatischen Verteilanlage zugeführt und an Verladestellen für den Versand beispielsweise Lastkraftwagen zugeführt. Dies kann manuell oder automatisch erfolgen.

Im Versandraum können die Hauptprodukte auf verschiedene Weise bearbeitet werden. Beispielsweise können im Versandraum Beilagen eingesteckt oder die Druckprodukte sonstwie veredelt und auch geschnitten werden. Im Versandraum werden ebenfalls die Pakete gebildet, und diese beispielsweise umreift. In der Regel sind auch Mittel zum Adressieren der Druckprodukte vorgesehen. Diese Verfahrensschritte werden von einem Versandraum Leitsystem gesteuert. Solche Versandraumleitsysteme sind an sich bekannt. Sie ermöglichen beispielsweise einen rutengerechten Versand.

Seit einiger Zeit werden in solchen Versandanlagen auch Zusatzprodukte, so genannte Add-On Produkte verarbeitet. Werden die Zusatzprodukte von extern angeliefert, werden sie als Fremdprodukte bezeichnet. Fremdprodukte sind in der Regel andere Druckerzeugnisse oder Werbeutensilien sein, beispielsweise Schlüsselanhänger. Intern hergestellte Zusatzprodukte werden als vorproduzierte Produkte bezeichnet, da sie in der Regel vor einer Hauptproduktion hergestellt und für die spätere Kommissionierung in einem Bereitstellungsbereich bereitgestellt werden. Das Verarbeiten und Versenden eines Hauptproduktes und eines oder mehrerer Zusatzprodukte wird auch als "co-mailing" bezeichnet. Das Kommissionieren des bereitgestellten Zusatzprodukts erfolgt in der Regel von Hand. Die Bedienungsperson verlädt die Zusatzprodukte vor während oder nach dem Hauptprodukt auf einer Rampe beispielsweise in einen Lastkraftwagen. Als Rampe wird hier der gesamte Bereich verstanden, der die Paketverteilung nach deren Produktion bis zur Ladung umfasst.

Der Erfindung liegt die Aufgabe zu Grunde, ein Verfahren der genannten Art zu schaffen, das einen einfacheren und effizienteren Versand von Hauptprodukt und vorproduzierten Produkten oder Fremdprodukten ermöglicht.

Die Aufgabe ist gemäss Anspruch 1 dadurch gelöst, dass die bereitgestellten Zusatzprodukte von einem erweiterten Leitsystem erfasst werden. Die Zusatzprodukte bzw. Add-On Produkte werden beim erfindungsgemässen Verfahren somit vom Leitsystem des Versandraumes erfasst. Damit erfolgt eine Eingliederung der Zusatzprodukte in einen laufenden Produktionsablauf. Da das Leitsystem auch den Bereitstellungsbereich, in welchem die Zusatzprodukte kommissioniert werden, umfasst, können diesem auch die Daten für die Bearbeitung und den Versand des wenigstens einen Zusatzprodukts zugeführt bzw. in dieses importiert werden. Vorzugsweise umfassen nach einer Weiterbildung der Erfindung die importierten bzw. importierbaren Produktionsdaten die Daten für die Verarbeitung des Hauptproduktes als auch die Daten für die Verarbeitung des wenigstens einen Zusatzprodukts. Solche Produktikonsdaten können Lieferpapiere bzw. Lieferscheine und/oder elektronische Anzeigen erzeugen, welche Kommissionieranweisungen für einen manuellen oder automatischen Arbeitsplatz enthalten. Eine solche Kommissionieranweisung kann auch mehrere unterschiedliche Titel oder Fremdprodukte enthalten, welche in einer Kommissioniereinheit, beispielsweise einem Gebinde zusammengefasst werden müssen. Aufgrund eines solchen Lieferpapiers oder einer entsprechenden elektronischen Anzeige können die Zusatzprodukte aus einem Lager manuell oder automatisch entnommen und einem Gebinde zugeführt werden. Damit ist für die vorproduzierten Produkte oder die Fremdprodukte eine Auslieferung und Kommissionierung über das Leitsystem möglich. Die Hauptproduktion kann dann somit mit der Kommissionierung und Auslieferung der Zusatzprodukte koordiniert werden. Vorteilhaft ist hierbei, dass die Erstellung der Lieferpapiere bzw. der Anzeige auf aktuellen Daten beruht. Kurzfristige Änderungen der Auflage, der Ausliefermengen oder der Abladestellen können somit einfach berücksichtigt werden. Das Kommissionieren und Verladen des Zusatzproduktes ist mit der Hauptproduktion synchronisiert. Vorteilhaft ist auch, dass die Auslieferung der Kommissioniereinheiten, also insbesondere der Gebinde, mit dem Leitsystem überwacht werden kann. Beispielsweise kann die Auslieferung der Gebinde am Dock und im Versandraum beispielsweise über elektronische Anzeigen visualisiert werden. Vorteilhaft ist auch die mögliche koordinierte Zuordnung der Kommissioniereinheiten, insbesondere der Gebinde zu den einzelnen Verladestellen bzw. Docks der Lastkraftwagen. Möglich ist auch eine Visualisierung der Produktionsdaten für die Fahrer der Lastkraftwagen, die damit den Status des für sie bestimmten Teils der Produktion einsehen können. Ein wesentlicher Vorteil ist auch die mögliche Zeiteinsparung sowie die Flexibilität beim Disponieren der Versandaufträge. Dadurch ergeben sich schliesslich wesentliche Kosteneinsparungen.

Weitere vorteilhafte Merkmale ergeben sich aus den abhängigen Patentansprüchen, der nachfolgenden Beschreibung sowie der Zeichnung.

Ein Ausführungsbeispiel des erfindungsgemässen Verfahrens wird nachfolgend anhand der Zeichnung näher erläutert. Es zeigen:
- Fig. 1: eine Versandanlage nach dem Stand der Technik,
- Fig. 2: eine erfindungsgemässe Versandanlage und
- Fig. 3: ein Ablaufschema des erfindungsgemässen Verfahrens.

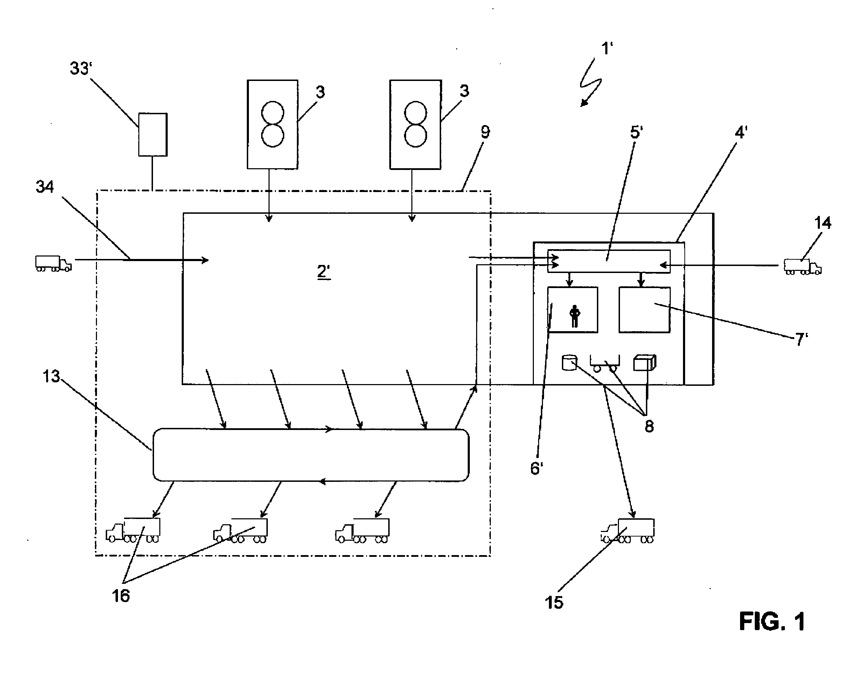

Figur 1 zeigt eine Versandanlage 1' nach dem Stand der Technik. Diese besitzt einen Versandraum 2', in dem hier nicht gezeigte Druckprodukte von Druckmaschinen 3 online als Druckereierzeugnisse, auch Hauptprodukte genannt, verarbeitet werden.

Ein Druckereierzeugnisse bzw. Hauptprodukt kann dazu aus einzelnen Druckprodukten bestehen, die online von einer oder mehreren Druckmaschinen 3 gedruckt werden sowie aus vorgängig gedruckten oder dem Versandraum 2' von extern über eine Anlieferung 34 zugeführte Druckprodukten. Die Druckereierzeugnisse sind beispielsweise Tageszeitungen, die im Offset- oder Digitaldruck von mindestens einer Druckmaschinen 3 gedruckt werden. Es ist auch denkbar, dass eine der Druckmaschinen zum Drucken einer Beilage oder eines vorproduzierten Produktes verwendet wird. Dieses vorproduzierte Produkt kann in einem Lager 5' zwischengelagert werden. Im Versandraum 2' werden die Druckprodukte verarbeitet, beispielsweise geschnitten, mit einer Beilage versehen und dergleichen. Die Druckprodukte werden zudem zu Paketen gebündelt und diese können adressiert bzw. mit einem Deckblatt versehen werden. Schliesslich werden die Druckprodukte einer automatischen Paketverteilung 13 übergeben. Diese kann zum Fördern der Pakete einen hier nicht näher bezeichneten endlosen Transportförderer aufweisen, auf dem die Pakete selbsttätig abgelegt werden, so dass sie für den Versand Transportmitteln 16, beispielsweise Lastkraftwagen, übergeben werden können. Mit den Transportmitteln 16 werden die Pakete zu den vorgesehenen Abladestellen oder Empfängern transportiert.

Auf die Transportmittel 16 werden zudem hier nicht gezeigte Zusatzprodukte verladen, die in einem Bereitstellungsbereich 4' kommissioniert werden. Der Bereitstellungsbereich 4' ist sinnvollerweise im oder direkt neben dem Versandraum 2' angeordnet. Es ist aber auch denkbar, dass der Bereitstellungsbereich 4' nicht im gleichen Gebäude wie der Versandraum 2' angeordnet ist sondern von diesem geographisch getrennt. Der Bereitstellungsbereich 4' besitzt das Lager 5' als Zwischenlager, in das die vorproduzierte Produkte und die Fremdprodukte eingelagert werden. Fremdprodukte können irgendwelche Produkte sein. Sie sind somit nicht zwingend Druckprodukte, sondern können beispielsweise Briefpost, Esswaren, Spielzeuge, Tonträger oder Werbeutensilien wie Schlüsselanhänger, Produktmuster und dergleichen sein. Diese werden in der Regel von einem Transportmittel 14, beispielsweise einem Lastkraftwagen, von extern zugeführt und im Lager 5' abgelegt. Das Lager 5' kann auch vorproduzierte Produkte enthalten, die mit einer der Druckmaschinen 3 vor oder während der Hauptproduktion gedruckt werden. Die Fremdprodukte werden manuell in einer manuellen Bereitstellung 6' und/oder automatisch in einer automatischen Bereitstellung 7' kommissioniert und in Gebinde 8 eingelegt. Die Steuerung der automatischen Bereitstellung 7' ist dabei autonom, d.h. dass die Informationen zum Kommissionieren nur im Bereich der automatischen Bereitstellung 7' eingelesen und zur Steuerung der Kommissionierung in diesem Bereich verwendet werden können.

Die Gebinde 8 bilden Kommissioniereinheiten. Mit dem Bezugszeichen 6' ist die manuelle angedeutet. Die Gebinde 8 mit den Fremdprodukten und gegebenenfalls mit vorproduzierten Produkten werden manuell in ein Transportmittel 15 geladen. Dieses Transportmittel kann vorher, gleichzeitig oder nachfolgend auch mit den Druckereierzeugnissen bzw. Hauptprodukten beladen werden. Das Transportmittel 15 kann somit auch ein Transportmittel 16 sein.

Die Prozesse im Versandraum 2' werden von einem Leitsystem 33', welches einen Erfassungsbereich 9 aufweist, überwacht bzw. gesteuert. Das Leitsystem 33' vernetzt dabei sämtliche Teilprozesse im Versandraum 2' und stellt sicher, dass alle Abläufe praxisgerecht ineinander greifen. Es ermöglicht eine zentrale und aktuelle Übersicht über sämtliche Prozesse und einen optimalen Materialfluss im Erfassungsbereich 9. Das Leitsystem 33' unterstützt weiter die Planung und steuert die Produktion.

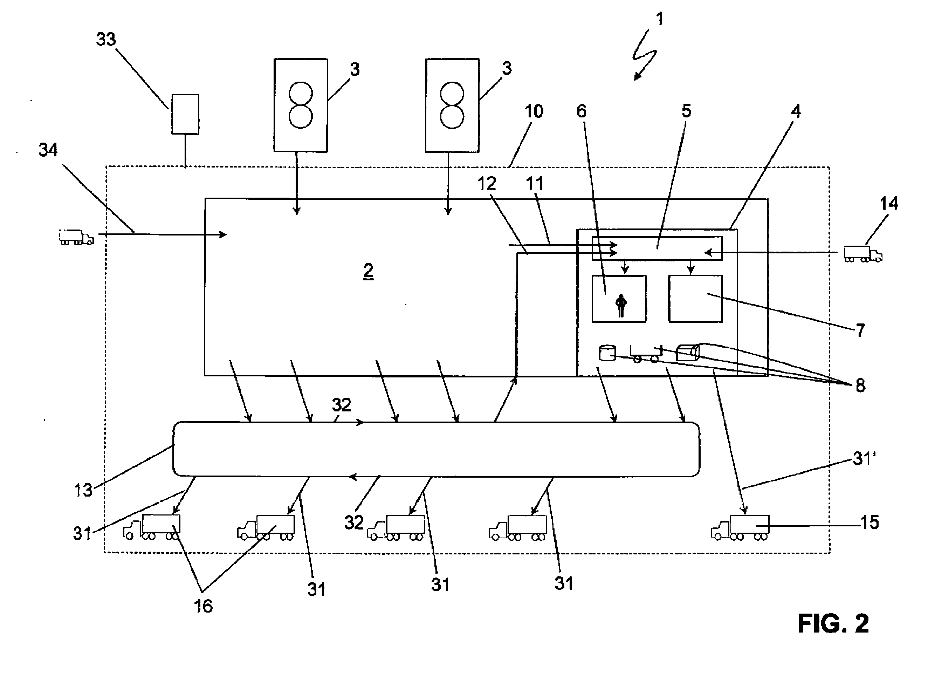

Die in Figur 2 gezeigte erfindungsgemässe Versandanlage 1 besitzt ebenfalls einen Versandraum 2 in dem während einer Hauptproduktion wie oben erläutert das Druckereierzeugnis bzw. das Hauptprodukt verarbeitet, der Paketverteilung 13 übergeben und schliesslich auf die Transportmittel 16 verladen wird. Der Verlad erfolgt jeweils an Ladestellen 31. Der Transport erfolgt bei der Paketverteilung 13 beispielsweise in Richtung der Pfeile 32 und somit im Uhrzeigersinn. Im Gegenuhrzeigersinn wäre aber auch denkbar. Die Paketverteilung erfolgt vorzugsweise automatisch. Es ist auch denkbar, dass es bei kleineren Versandanlagen 1 die Paketverteilung 13 nicht gibt und die ganze Paketverteilung nach Anweisung des Leistsystems manuell beispielsweise über eine oder mehrere Verladerampen erfolgt.

Die Prozesse im Versandraum 2 werden von einem erweiterten Leitsystem 33, welches einen Erfassungsbereich 10 aufweist, überwacht bzw. gesteuert. Zusätzlich zu dem oben beschriebenen Leitsystem 33" wird im Erfassungsbereich 10 des erweiterten Leitsystems 33 der Bereitstellungsbereich 4 überwacht bzw. gesteuert.

Der Versandraum 2 umfasst ebenfalls einen Bereitstellungsbereich 4. Dem Lager 5 des Bereitstellungsbereich 4 können im Versandraum 2 vorproduzierte Produkte direkt über eine Anlieferung 11 oder indirekt über die Paketverteilung 13 und eine Anlieferung 12 zugeführt werden. Diese vorproduzierten Produkte sind beispielsweise Druckprodukte, die von einer der Druckmaschinen 3 gedruckt werden und auf Paletten gestapelt, auf Rollen aufgewickelt, zu Stangen gepresst, in Behältnissen verpackt oder einzeln bzw. im Schuppenstrom mittels Fördersystem in den Bereitstellungsbereich 4 gelangen. Die vorproduzierten Produkte können jedoch auch ausserhalb der Versandanlage 1 hergestellt und dem Lager 5 zugeführt werden.

Das Lager 5 enthält wie bereits oben erwähnt auch Fremdprodukte, die vor oder während einer Hauptproduktion mittels Transportmitteln 14 angeliefert werden. Die Fremdprodukte und gegebenenfalls die vorproduzierten Produkte werden wie bereits oben im Stand der Technik erwähnt, manuell und/oder automatisch kommissioniert und in die Gebinde 8 abgelegt. Die Gebinde 8 sind beispielsweise Rollwagen, Körbe, Paletten, Boxen oder sonst wie geeignete Behälter. Die Belieferung des Lagers 5 erfolgt vorzugsweise aber nicht zwingend automatisch und wird hierbei vom genannten Leitsystem gesteuert. Dieses erweiterte Leitsystem 33 enthält die Produktionsdaten für das Hauptprodukt bzw. die Hauptprodukte und auch für die Zusatzprodukte. Das erweiterte Leitsystem 33 umfasst somit sowohl die Hauptproduktion, d.h. die Verarbeitung von Druckprodukten zu Druckereierzeugnissen als auch den Bereitstellungsbereich 4 der Zusatzprodukte.

Das erweiterte Leitsystem 33 erzeugt für die Kommissionzerarbeit im Kommissionierbereich 4 jeweils eine aktuelle Lieferinformation, beispielsweise ein Lieferpapier, oder eine entsprechende digitale Anzeige. Aufgrund dieser Lieferinformationen bzw. der Lieferpapiere oder der entsprechenden Anzeigen z.B. auf Bildschirmen werden die Gebinde 8 manuell oder automatisch mit den Zusatzprodukten beladen und können der Paketverteilung 13 automatisch oder manuell an einer Versandstelle 31' einem Transportmittel 15 übergeben werden. Wiederum kann ein Transportmittel 15 auch ein Transportmittel 16 sein.

Die Lieferinformationen wie Lieferpapiere bzw. Lieferscheine oder die digitalen Anzeigen sind automatisierte Verladeanweisungen und sind über das Leitsystem 33 mit der Hauptproduktion synchronisiert. Damit kann sichergestellt werden, dass die richtige Anzahl und die richtige Art von Fremdprodukten zum gewünschten Zeitpunkt, im geeigneten Gebinde 8 an der gewünschten Verladestelle 31, 31' ist. Die Auslieferung kann überwacht und auch visualisiert werden. Es sind somit Anzeigen beispielsweise an den Verladestellen 31 möglich, die den aktuellen Verladestand der Hauptprodukte sowie der Zusatzprodukte anzeigen. Das Leitsystem stellt somit dem Operator der manuellen Bereitstellung 6 des Bereitstellungsbereichs 4 die Informationen zur Verfügung, um die Gebinde 8 bzw. die Kommissioniereinheiten richtig zu beladen und zur richtigen Zeit an der Paketverteilung 13 einzuspeisen oder der Verladestelle 31' zuzuführen. Anhand der vom Leitsystem 33 erhaltenen Informationen weiss der Operateur exakt, wann wie viele Pakete vorgesehen sind, wie gross diese Pakete sein sollen und welche vorproduzierten Produkte und oder Fremdprodukte das Kommissionierpaket bzw. die Gebinde 8 enthalten sollen. Mit dem Leitsystem kann auch sichtbar gemacht werden, welches der Produktionsforschritt im gesamten oder pro Hauptprodukt, vorproduziertes Produkt oder Fremdprodukt jeweils pro Transportmitte115 bzw. 16 ist. Der Operateur ist auch genau darüber informiert, welches Gebinde 8 zu welchem Zeitpunkt welchem Transportmittel 15 bzw. 16 einzuspeisen ist.

Damit das erweiterte Leitsystem 33 die Versandraum 2 und den Bereitstellungsbereich 4 entsprechend steuern kann, werden im die Produktionsdaten für die Hauptproduktion und die Fremdprodukte als auch gegebenenfalls die vorproduzierten Produkte zugeführt bzw. in diesem erfasst. Ebenfalls können Routeninformationen mit Abladestellen der Transportmittel 15, 16 importiert werden, falls dies erforderlich ist. Aufgrund dieser Informationen werden vom Leitsystem sogenannte Sammeljobs pro Transportmittel 15 bzw. 16 gebildet. Diese enthält auch die erwähnte Kommissionieranweisung für manuelle Bereitstellung 6 im Bereitstellungsbereich 4. Das Leitsystem 33 kann auch Deckblätter generieren, welche die Kommissionieranweisungen für die manuellen Bereitstellung 6 sowie Informationen für die Führer der Transportmittel 15, 16 enthalten können.

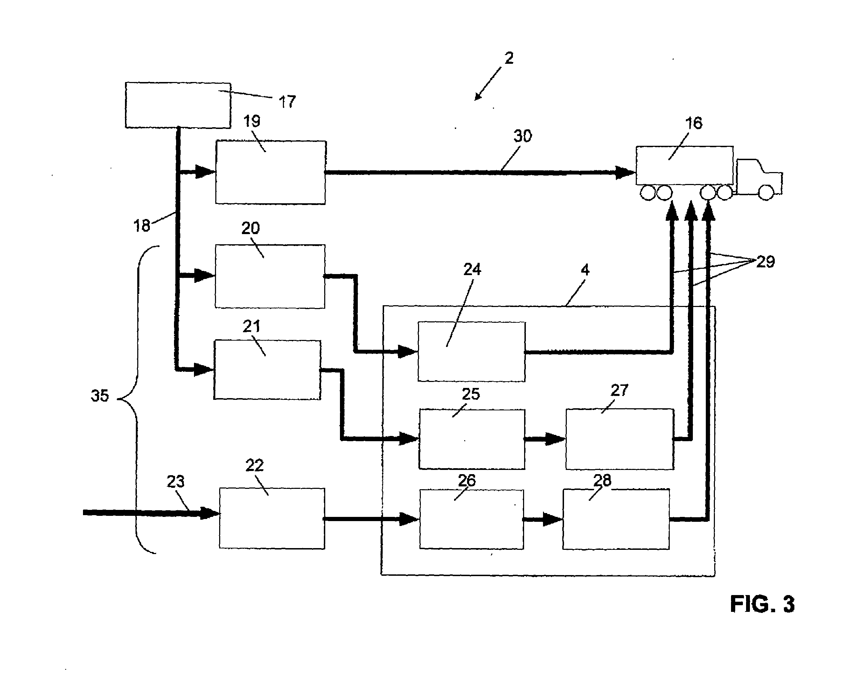

Die Figur 3 zeigt eine Übersicht über den Verfahrensablauf. Eine Produktion 17 umfasst eine Hauptproduktion 19, eine vorproduzierte Produktion 20 und eine weitere vorproduzierte Produktion 21. Die Produktion 17 kann innerhalb oder ausserhalb des Versandraumes 2 beispielsweise mit zumindest einer der oben erwähnten Druckmaschinen 3 erfolgen. Die vorproduzierte Produktion 20, die weitere vorproduzierte Produktion 21 sowie die Produktion 17 können als Zusatzprodukte 35 zusammengefasst werden. Der Pfeil 18 zeigt die entsprechende Aufteilung an. Die Hauptproduktion 19 umfasst beispielsweise eine Tageszeitung und die vorproduzierte Produktion 20 die automatische Verarbeitung eines vorproduzierten Produktes beispielsweise eine weitere Tageszeitung. Die vorproduzierte Produktion 21 umfasst eine manuelle Verarbeitung eines vorproduzierten Produktes. Die Produktion 17 wird wie oben erwähnt vom Leitsystem gesteuert, das die entsprechenden Daten enthält. Dem Versandraum 2 werden gemäss Pfeil 23 Fremdprodukte 22 angeliefert. Die Herstellung dieser Fremdprodukte 22 erfolgt in der Regel ausserhalb des Versandraums 2.

Die Hauptproduktion 19 bzw. die entsprechenden Druckereierzeugnisse oder Hauptprodukte werden gemäss Pfeil 30 direkt aus dem Versandraum in die Transportmittel 16 verladen. Die Hauptprodukte können mit Beilagen ergänzt, geheftet, geschnitten oder sonst wie veredelt und verarbeitet werden. In der Regel werden auch entsprechende Pakete gebildet und diese adressiert oder mit Deckblättern versehen. Das Verladen erfolgt vorzugsweise automatisch über die oben erwähnte Paketverteilung 13. Die Zusatzprodukte 35 werden dem Kommissionierbereich 4 zugeführt. Dieser besitzt ein Lager 24 pro Transportmittel 15, 16 tür die vorproduzierte Produktion 20, ein Lager 25 für die vorproduzierten Produkte 21 und ein Lager 26 für die Fremdprodukte 22. Die vorproduzierten Produkte aus dem Lager 24 können selbsttätig, automatisch über ein geeignetes Transportsystem dem Transportmittel 16 angeliefert werden. Die vorproduzierten Produkte aus dem Lager 25 und die Fremdprodukte aus dem Lager 26 werden manuell oder automatisch kommissioniert, wie dies mit den Bezugszeichen 27 und 28 angedeutet ist. Die Anlieferung zum Transportmittel 16 kann gemäss den Pfeilen 29 somit über drei Wege erfolgen. Das Verfahren kann hier auch eine Produktion umfassen, bei welcher beispielsweise lediglich eine Hauptproduktion 19 und die Kommissionierung aus dem Lager 26 durchgeführt wird. Dem Transportmittel 16 werden hierbei somit lediglich Hauptprodukte und Fremdprodukte angeliefert. Denkbar ist auch die Anlieferung von mehreren unterschiedlichen Fremdprodukten und/oder vorproduzierten Produkten. Wesentlich ist wie erwähnt die Integration des Kommissionierbereiches 4 in die Hauptproduktion. Die Kommissionieranweisungen im Kommissionierbereich 4 erfolgen somit vom Leitsystem, welches die Hauptproduktion 19 steuert.

## Patentansprüche

1. Verfahren zum Kommissionieren von in einem Versandraum (2) mittels Leitsystem (33') zu Druckereierzeugnissen verarbeiteten Druckprodukten mit bereitgestellten Zusatzprodukten (35) , **dadurch gekennzeichnet, dass** die bereitgestellten Zusatzprodukte (35) von einem erweiterten Leitsystem (33) erfasst werden.

2. Verfahren nach Anspruch 1, **dadurch gekennzeichnet, dass** dem erweiterten Leitsystem (33) Daten zur Verarbeitung der bereitgestellten Zusatzprodukte (35) zugeführt werden.

3. Verfahren nach Anspruch 1 oder 2, **dadurch gekennzeichnet, dass** das Zusatzprodukt (35) in wenigstens einer Kommissioniereinheit (8), in welches das wenigstens eine Zusatzprodukt (35) manuell oder automatisch zugeführt wird, für den Versand bereitgestellt wird.

4. Verfahren nach Anspruch 3, **dadurch gekennzeichnet, dass** die Kommissioniereinheit (8) manuell verladen oder einer automatischen Paketverteilung (13) zugeführt wird.

5. Verfahren nach einem der Ansprüche 1 bis 4, **dadurch gekennzeichnet, dass** das Leitsystem (33) aufgrund importierter Daten wenigstens eine Kommissionieranweisung für die Zusatzprodukte (35) erzeugt.

6. Verfahren nach Anspruch 5, **dadurch gekennzeichnet, dass** wenigstens ein Lieferschein oder eine elektronische Anzeige erzeugt wird, welche die wenigstens eine Kommissionieranweisung enthält bzw. wiedergibt.

7. Verfahren nach Anspruch 5 oder 6, **dadurch gekennzeichnet, dass** die wenigstens eine Kommissionieranweisung für eine manuelle Bereitstellung (6) erzeugt wird.

8. Verfahren nach einem der Ansprüche 5 bis 7, **dadurch gekennzeichnet, dass** die wenigstens eine Kommissionieranweisung ablagen-, routen- oder fahrzeuggerecht ist.

9. Verfahren nach einem der Ansprüche 5 bis 8, **dadurch gekennzeichnet, dass** die wenigstens eine Kommissionieranweisung mehrere unterschiedliche Zusatzprodukte (20, 21, 22) umfasst.

10. Anlage zum Kommissionieren von in einem Versandraum (2) mittels Leitsystem (33) zu Druckereierzeugnissen verarbeiteten Druckprodukten mit bereitgestellten Zusatzprodukten (35), **dadurch gekennzeichnet, dass** das Leitsystem (33) zum Miterfassen der bereitgestellten Zusatzprodukte (35) ausgebildet ist.

11. Anlage nach Anspruch 10, bestehend aus einem Versandraum (2) und einem Bereitstellungsbereich (4) für Zusatzprodukte (35), die zum Erfassungsbereich (10) des Leitsystems (33) gehören.
